# DEMANDE DE BREVET EUROPEEN

(11) **EP 0 997 717 A1**
(43) Date de publication de la demande: **03.05.2000**
(21) Numéro de dépôt: 99450023.9
(22) Date de dépôt: 29.10.1999
(51) Int. Cl.: G01K 11/12, G01K 11/18

(54) **Dispositif d'indication et d'affichage d'un paramètre physique notamment la température, a partir de revêtements**

(30) Priorité: 30.10.1998 FR 9813879
(71) Demandeur: Cesbron, Marie-Pierre, 13420 Gemenos (FR)
(72) Inventeur: Cesbron, Marie-Pierre, 13420 Gemenos (FR)
(74) Mandataire: Thébault, Jean-Louis

(57) **Abrégé**

- L'objet de l'invention est un dispositif d'indication et d'affichage d'un paramètre physique, notamment la température, par application d'au moins un revêtement thermochromique sur un support, suivant un contour donné, caractérisé en ce qu'il comprend une succession d'au moins deux zones juxtaposées, recouvertes chacune d'une couche d'un revêtement sensible audit paramètre physique et présentant une première couleur pour une plage donnée de valeurs et une seconde couleur en dehors de cette plage, chaque couche de revêtement de chaque zone ayant un point de transition de la première couleur à la seconde pour une plage donnée de valeurs, les plages de deux zones contiguës couvrant des valeurs du paramètre physique assurant une continuité desdites valeurs.

## Description

La présente invention concerne un dispositif d'indication et d'affichage d'un paramètre physique notamment la température, à partir de revêtements, et plus particulièrement la température d'une substance alimentaire dans un contenant tel qu'une bouteille de vin.

On a cherché à indiquer des paramètres physiques et notamment la température à partir de moyens statiques en remplacement des moyens dynamiques.

C'est ainsi par exemple que la température d'un liquide dans un contenant peut être mesurée au moyen d'un thermomètre à mercure ou mieux encore pour éviter le mercure et ses inconvénients, au moyen d'un thermomètre à alcool.

Le thermomètre à alcool est particulièrement bien connu et répandu, et surtout sa lecture est facilitée par la couleur généralement rouge qui lui est associée, en regard d'une échelle graduée correspondant à des températures étalonnées.

Un tel thermomètre est bien connu par exemple pour apprécier la température d'un liquide, plus spécialement un vin. Dans ce cas, après ouverture du bouchon, le thermomètre est mis en contact par son réservoir avec le liquide pour permettre de connaître la température par lecture directe.

L'inconvénient immédiat est que cette opération nécessite l'ouverture de la bouteille et qu'elle ne peut être réalisée que dans le cas où le vin contenu doit être bu.

De plus, si le liquide est à une température inadéquate, il faut soit remettre la bouteille dans un lieu frais, si la température est trop élevée, soit attendre que le liquide remonte en température, ce qui nécessite de réaliser plusieurs fois successivement la mesure de température au cours du temps.

Ces thermomètres à alcool ont l'avantage d'être très précis mais ils restent fragiles et encombrants les rendant impropres à certaines applications.

La technique a évolué et propose des thermomètres à cristaux liquides disposés dans des bandes très minces, cristaux qui changent de couleur en fonction de la température. De tels cristaux liquides donnent une information dynamique de la température mais ils restent de lecture délicate dans le sens où il faut associer une couleur donnée, s'il y en a une, à la plage des températures recherchées. On note que la lecture est indirecte puisqu'il faut connaître le code associé et de ce fait, l'utilisateur ne déduit pas immédiatement l'information, de façon instinctive, contrairement au thermomètre à alcool précédemment décrit.

On a cherché à faire paraître directement sur les produits et les contenants scellés en particulier, une information, à lecture instinctive et quasi-dynamique, comme la température et il est alors possible par des cristaux liquides déposés sur une bande elle-même rapportée sur le contenant de déterminer la température du produit contenu dans le contenant.

Un inconvénient de cet agencement est celui d'utiliser des cristaux liquides qui ne donnent pas une lecture directe comme expliqué ci-avant mais qui doit être interprétée en fonction d'indications complémentaires annexées à la bande.

De plus, si l'on décide que la couleur verte couvre la plage de températures recherchées pour essayer de se rapprocher d'une lecture instinctive, il faut étalonner la zone de couleur verte pour qu'elle couvre bien cette plage, ce qui rend ladite bande spécifique. En effet, si une couleur est associée à une plage donnée, cela interdit de réaliser une même bande couvrant plusieurs plages de températures et donc applicable à plusieurs produits.

Enfin, les cristaux liquides ont un inconvénient technique important, leur fragilité en plus des difficultés pour les produire qui conduisent à un coût de revient important.

Dans un domaine différent qui est celui des piles et des moyens indicateurs de l'état de charge de la pile, il existe des moyens tels que ceux décrits dans la demande de brevet WO 92/14144. Dans ce cas, il est prévu de disposer une résistance soumise au courant de charge de la pile portant le test, par une action simple de mise en contact par l'utilisateur. Le fait de faire parcourir cette résistance par un courant conduit à un échauffement par effet Joule. Il suffit d'étalonner différentes zones avec des résistances de valeurs données pour produire une quantité de chaleur donnée et pour en déduire la quantité de courant qui passe et donc l'état de charge de la pile. Pour permettre une lecture simplifiée, il est prévu d'utiliser une bande de couleur donnée, par exemple jaune, et de la recouvrir par dépose d'un revêtement thermochromique opaque lorsque la température est inférieure à un seuil donné de température et transparent lorsque ce seuil est dépassé.

Ainsi pour les zones suffisamment chauffées, au droit des résistances suffisamment alimentées en énergie, le revêtement thermochromique devient transparent laissant apparaître la bande jaune. On en déduit l'état de charge.

Un tel agencement est particulièrement intéressant en ce sens qu'il supprime le recours aux cristaux liquides mais reste d'une application limitée puisque ce sont les résistances qui définissent les différentes zones d'échauffement, si bien qu'un tel dispositif n'est sensible qu'à une température unique.

La présente invention propose un dispositif d'affichage sensible à un paramètre physique, en l'occurrence la température, qui est simple et très fiable, qui est facile à fabriquer, qui est d'une grande résistance aux chocs et aux coups, qui est d'une grande lisibilité instinctive, qui peut couvrir plusieurs plages, qui présente des variations quasi-continues, qui peut prendre toute forme adaptée, qui peut être intégré très facilement sur de nombreux supports même des étiquettes, qui peut être fabriqué au cours des étapes d'impression du produit ou qui peut être réalisé indépendamment et qui est d'un faible prix de revient.

A cet effet, selon l'invention, le dispositif d'indication et d'affichage d'un paramètre physique, notamment la température, par application de revêtements thermochromiques sur un support, suivant un contour donné, se caractérise en ce qu'il comprend une succession d'au moins deux zones juxtaposées, recouvertes chacune d'une couche d'un revêtement sensible audit paramètre physique et présentant une première couleur pour une plage donnée de valeurs et une seconde couleur en dehors de cette plage, chaque couche de revêtement de chaque zone ayant un point de transition de la première couleur à la seconde pour une plage donnée de valeurs, les plages de deux zones contiguës couvrant des valeurs du paramètre physique assurant une continuité desdites valeurs.

Selon un mode de réalisation préféré, la première couleur est identique pour chacune des zones sensibles et la seconde couleur est identique pour chacune de ces mêmes zones sensibles pour assurer une continuité de couleur des zones sensibles aux plages communes.

Selon un mode particulier, la première couleur est foncée pour générer une opacité et la seconde couleur est très claire pour générer une transparence.

Selon une autre caractéristique, le dispositif comprend une couche de base, de couleur constante, disposée sous l'ensemble des zones, sous les couches de revêtement thermochromique.

Selon une variante, la couche de revêtement de chaque zone couvre toutes les autres zones moins sensibles au paramètre physique.

Selon une application particulière, les couches de revêtement sont sensibles à la température et le contour donné définit un thermomètre.

Le support du dispositif peut être une étiquette sur laquelle les couches de revêtement sont apposées par impression.

De façon plus spécifique, le support est avantageusement un contenant recevant une substance alimentaire en sorte de déterminer la température de ladite substance.

La présente invention est maintenant décrite en détails selon un mode particulier de réalisation, en regard des dessins annexés sur lesquels les différentes figures représentent :
- figure 1, une vue en perspective du dispositif selon l'invention, intégré à une étiquette de bouteille,
- figures 2A et 2B, des vues de face du dispositif dans une première et une seconde configuration,
- figure 3, une vue en coupe d'un premier mode de réalisation,
- figure 4, une vue en coupe d'un deuxième mode de réalisation, et
- figure 5, une vue en coupe d'un troisième mode de réalisation.

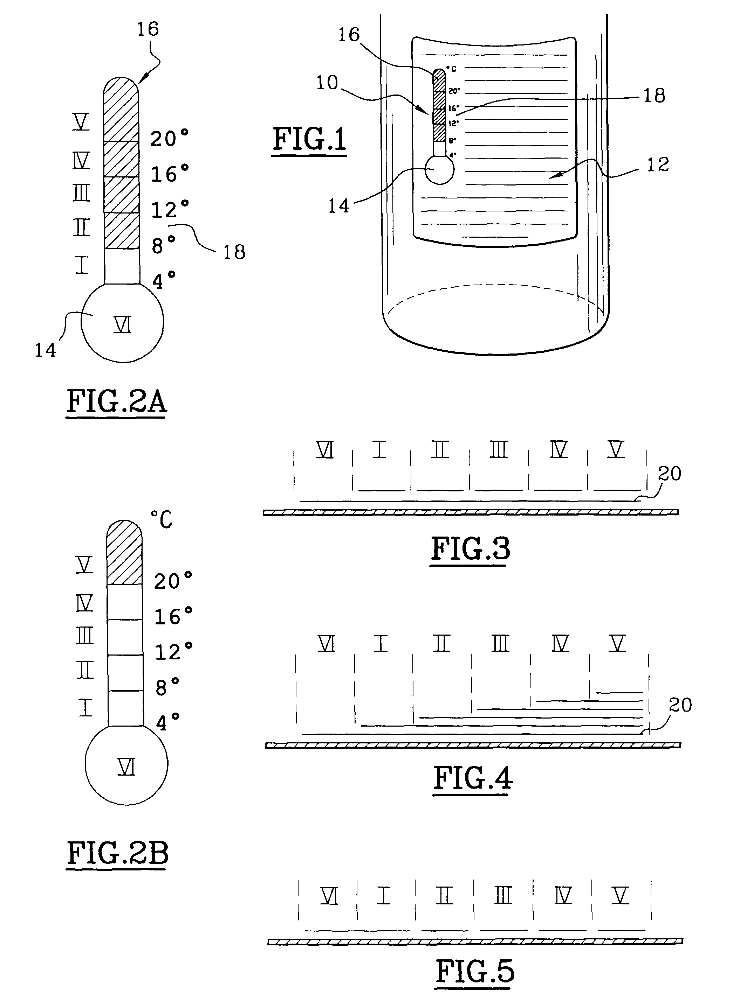

Sur la figure 1, on a représenté le dispositif d'affichage qui se présente sous la forme d'un thermomètre 10 à alcool, imprimé sur un support 12 en papier, en l'occurrence une étiquette. Ce thermomètre 10 a un réservoir 14 et une colonne 16 à laquelle sont associées des graduations 18.

Dans le cas présent, pour une application au vin, l'étalonnage comporte 5 graduations 4, 8, 12, 16 et 20°C. Ces graduations définissent cinq zones I, II, III, IV et V dans la colonne, en plus de la zone VI qui correspond au réservoir.

Une couche 20 de base est imprimée sur le support 12, sur toute la zone du réservoir VI et sur toutes les zones I à V de la colonne, par exemple de couleur rouge pour se rapprocher de la couleur du fluide marqueur des thermomètres à alcool.

Dans un premier mode de réalisation montré sur la figure 3, on dispose un revêtement thermochromique, sous forme de couche de peinture ou d'encre, qui est clair, voire transparent, à une température supérieure à 4°C par exemple et foncé, voire opaque, à une température inférieure à 4°C.

Sur la couche 20 de base, sur la zone II, on dispose un revêtement thermochromique qui est clair, voire transparent à une température supérieure à 8°C et foncé, voire opaque à une température inférieure à 8°C.

Sur la couche 20 de base, sur toute la zone III, on dispose un revêtement thermochromique qui est clair, voire transparent à une température supérieure à 12°C et foncé, voire opaque à une température inférieure à 12°C.

Sur la couche 20 de base, sur toute la zone IV, on dispose un revêtement thermochromique qui est clair, voire transparent à une température supérieure à 16°C et foncé, voire opaque à une température inférieure à 16°C.

Sur la couche 20 de base, sur toute la zone V, on dispose un revêtement thermochromique qui est clair, voire transparent à une température supérieure à 20°C et foncé, voire opaque à une température inférieure à 20°C.

On note ainsi que la surface limitée par le contour, en l'occurrence le thermomètre, est d'une couleur rouge, grâce à la transparence et/ou d'une couleur foncée, par exemple bleue avec présence d'une zone de transition lorsque le produit est à une température intermédiaire.

Ainsi, sur la figure 2A, on constate que la température de la bouteille est inférieure à 8°C car la zone VI apparaît en rouge puisqu'elle est exempte de tout revêtement thermochromique et la zone I apparaît également en rouge puisque le revêtement thermochromique de cette zone est transparent dans cette plage de températures. Les autres zones sont opaques et apparaissent en une couleur foncée, opaque, masquant la couleur rouge de la couche 20 de base.

Ainsi, si le dispositif est apposé sur une bouteille de vin de champagne, le consommateur est informé que la bouteille est à une température de consommation adaptée, de même pour un vin devant se boire frais comme du vin rosé tandis que cette température est trop basse pour la plupart des vins rouges.

Sur la figure 2B, le consommateur constate immédiatement à la lecture, comme sur un thermomètre réel, que la température de consommation, sensiblement de 20°C, est adaptée pour un vin rouge mais beaucoup trop élevée pour un vin blanc doux ou pour un vin de champagne.

Dans le cas du mode de réalisation de la figure 4, on constate que la différence se trouve au niveau de la disposition des couches de revêtement thermochromique.

En effet, la couche 20 de base reste inchangée mais les couches de revêtement thermochromique se prolongent sur toute la longueur de la zone concernée et se prolongent sur toutes les autres zones dont la température de transformation est à une température supérieure ou de façon générale, qui présente une sensibilité moindre.

Ainsi, le revêtement thermochromique de la zone I recouvre les autres zones Il à V.

Le revêtement thermochromique de la zone II, sans recouvrir la zone I, recouvre les autres zones II, IV et V et ainsi de suite pour les autres zones.

Dans cette variante, les effets obtenus sont renforcés car la superposition des couches permet d'obtenir une opacité plus importante et une transparence encore plus progressive permettant de donner plus précisément une indication sur les températures intermédiaires. En effet, la transparence est plus ou moins marquée, ce qui permet à l'observateur de déduire instinctivement que la température est dans la partie basse ou haute de la plage concernée.

Un tel dispositif présente aussi l'avantage d'une très faible inertie si bien que l'indication est très fidèle à la température car le temps de transition est très court.

Un autre avantage est la facilité de réalisation. L'apposition des différentes couches est obtenue directement en imprimerie, de façon connue avec des moyens connus, au cours des étapes d'impression du reste de l'étiquette ou du produit, sans requérir d'étapes complémentaires ou de matériels supplémentaires et spécifiques.

Le deuxième mode de réalisation est intéressant aussi pour sa mise en oeuvre car les couches étant superposées, il n'y a aucun risque de discontinuité entre les différentes zones.

On constate ainsi qu'il y a dans le premier comme dans le deuxième mode, une lecture instantanée de la température et l'effet de modification de la température est de type quasi-dynamique.

Selon un autre mode de réalisation, représenté sur la figure 5, les différentes zones sont recouvertes chacune par un revêtement d'une couleur donnée, en l'absence de toute couche de fond. Chacun de ces revêtements est d'une couleur initiale donnée, jaune par exemple, et vire à une autre couleur, rouge par exemple, dès que la température de transition est atteinte. Par contre ces différents revêtements, qui présentent les mêmes caractéristiques de couleur, ont des points variables de transition en fonction des plages de températures. Celle de la zone I vire du jaune au rouge lorsque la température est supérieure à 4°C, celle de la zone II vire du jaune au rouge lorsque la température est supérieure à 8°C, celle de la zone III vire du jaune au rouge lorsque la température est supérieure à 12°C et ainsi de suite.

On obtient ainsi un effet de lecture instinctive identique. La difficulté réside dans l'élaboration des revêtements thermochromiques, du type peintures ou encres, adaptés et dans l'apposition de ces revêtements sur le support 12.

Selon un perfectionnement de l'invention, certains produits peuvent être dégradés ou de moins bonne qualité lorsqu'ils ont été exposés à une température trop haute ou trop basse pendant une période de temps donnée, comme le vin par exemple. Or la traçabilité est impossible a posteriori. De ce fait il est possible d'adjoindre en partie basse du thermomètre ou en partie haute, un revêtement thermochromique irréversible. De ce fait lorsque le produit est exposé à une température trop importante pendant une durée suffisante, le revêtement thermochromique vire de couleur de façon définitive. Ainsi, un revêtement transparent peut devenir opaque au-delà d'une exposition de plus de 8 heures à 50°C. Il suffit d'imprimer avec ce revêtement un message ou un pictogramme adapté informant visuellement le consommateur.

Comme le consommateur se préoccupe de la température, il ne peut omettre de voir le message indiquant que le produit est impropre à la consommation ou qu'il est pour le moins dégradé.

On constate que suite à l'exemple particulier non limitatif donné ci-avant, les applications de l'invention sont nombreuses. On peut ainsi envisager, compte tenu de la simplicité et du prix de revient, d'apposer le dispositif sur des produits à faible valeur ajoutée comme les produits alimentaires à réchauffer dans leurs emballages, ceci étant tout à fait adapté pour les pots des repas pour nourrissons. Dans ce dernier cas, il est impératif de limiter la température de réchauffage. Or les moyens de réchauffage comme les fours à micro-ondes ou les réchauffeurs portables sont difficiles à maîtriser.

Une autre application pertinente est l'indication de température d'une cire à épiler qui est apposée sur la peau et ceci à une température spécifique :
- trop chaude, elle risque d'engendrer des brûlures et se présente sous une forme trop liquide, et
- trop froide, elle est inopérante.

La fiabilité du produit permet de l'utiliser pour ces applications de sécurité, sans risques d'erreurs.

Selon l'invention, il est possible de trouver des applications différentes avec des revêtements sensibles à d'autres paramètres physiques comme par exemple le degré hygrométrique pour les produits sensibles aux variations d'humidité.

## Revendications

1. Dispositif d'indication et d'affichage d'un paramètre physique, notamment la température, par application d'au moins un revêtement thermochromique sur un support, suivant un contour donné, caractérisé en ce qu'il comprend une succession d'au moins deux zones juxtaposées, recouvertes chacune d'une couche d'un revêtement sensible audit paramètre physique et présentant une première couleur pour une plage donnée de valeurs et une seconde couleur en dehors de cette plage, chaque couche de revêtement de chaque zone ayant un point de transition de la première couleur à la seconde pour une plage donnée de valeurs, les plages de deux zones contiguës couvrant des valeurs du paramètre physique assurant une continuité desdites valeurs.

2. Dispositif d'indication et d'affichage selon la revendication 1, caractérisé en ce que la première couleur est identique pour chacune des zones sensibles et la seconde couleur est identique pour chacune de ces mêmes zones sensibles pour assurer une continuité de couleur des zones sensibles aux mêmes plages.

3. Dispositif d'indication et d'affichage selon la revendication 1 ou 2, caractérisé en ce que la première couleur est foncée pour générer une opacité et la seconde couleur est très claire pour générer une transparence.

4. Dispositif d'indication et d'affichage selon la revendication 3, caractérisé en ce qu'il comprend une couche de base, de couleur constante, disposée sous l'ensemble des zones sous les couches de revêtement thermochromique.

5. Dispositif d'indication et d'affichage selon la revendication 3 ou 4, caractérisé en ce que la couche de revêtement de chaque zone couvre toutes les autres zones moins sensibles au paramètre physique.

6. Dispositif d'indication et d'affichage selon l'une quelconque des revendications précédentes, caractérisé en ce que les couches de revêtement sont sensibles à la température.

7. Dispositif d'indication et d'affichage selon la revendication 6, caractérisé en ce que le contour donné définit un thermomètre.

8. Dispositif d'indication et d'affichage selon l'une quelconque des revendications précédentes, caractérisé en ce que le support est une étiquette et en ce que les couches de revêtement sont apposées par impression.

9. Dispositif d'indication et d'affichage selon l'une quelconque des revendications 6, 7 ou 8, caractérisé en ce que le support est un contenant recevant une substance alimentaire en sorte de déterminer la température de ladite substance.
